# FASCICULE DE BREVET EUROPEEN

(11) **EP 4 041 625 B1**
(45) Date de publication et mention de la délivrance du brevet: **05.11.2025**
(21) Numéro de dépôt: 20788792.8
(22) Date de dépôt: 09.10.2020
(51) Int. Cl.: B63B 21/16, B63B 21/66, G01V 1/38, B63G 8/42

(54) **DISPOSITIF SOUS-MARIN REMORQUE ET SYSTEME DE MANUTENTION DU DISPOSITIF SOUS-MARIN**
GESCHLEPPTE UNTERWASSERVORRICHTUNG UND SYSTEM ZUR HANDHABUNG DER UNTERWASSERVORRICHTUNG
TOWED UNDERWATER DEVICE AND SYSTEM FOR HANDLING THE UNDERWATER DEVICE

(30) Priorité: 10.10.2019 FR 1911229
(43) Date de publication de la demande: 17.08.2022
(73) Titulaire: THALES, 92400 Courbevoie (FR)
(72) Inventeur: CADALEN, François, 29238 BREST (FR); BODILIS, Mathieu, 29238 BREST (FR); WARNAN, François, 29238 BREST (FR); LAGADEC, Jean, 29238 BREST (FR); COHERE, Jean-Baptiste, 29238 BREST (FR)
(74) Mandataire: Atout PI Laplace
(86) Numéro de dépôt international: PCT/EP2020/078372
(87) Numéro de publication internationale: WO 2021/069640

(56) Documents cités:
- DE-A1- 102013 105 593
- FR-A1- 3 027 013

## Description

La présente invention concerne un dispositif sous-marin destiné à être remorqué par un bâtiment de surface et un système de manutention destiné à être installé sur le bâtiment de surface (« surface ship » en anglais) et permettant de stocker et déployer le dispositif sous-marin. L'invention trouve une utilité particulière dans le domaine des dispositifs sous-marins du type sonar actif comprenant un câble tractant un corps remorqué intégrant une antenne d'émission (« transmission array » en anglais). Le corps remorqué est parfois appelé « poisson » en raison de sa forme. Une antenne linéaire de réception formant un corps allongé souple est tractée derrière le poisson. L'antenne linéaire de réception est parfois appelé « flûte » également en raison de sa forme. Le corps remorqué peut être un corps volumique suspendu au câble tracteur (« tow cable » en anglais) ou bien être de forme allongée selon un axe longitudinal et intégrant une antenne linéaire d'émission comprenant des transducteurs répartis selon l'axe longitudinal. Un exemple de dispositif sous-marin destiné à être remorqué par un bâtiment de surface et de son système de manutention est donné dans le document DE 10 2013 105593 A1.

La manutention de tels dispositifs sous-marins est délicate. Plus précisément, hors des périodes d'utilisation, le dispositif sous-marin est stocké sur un pont du bâtiment de surface, généralement un pont arrière. La mise à l'eau et la récupération du dispositif sous-marin requiert la présence d'opérateurs sur le pont arrière du bâtiment de surface. Les opérateurs sont amenés à manipuler des charges lourdes, ce qui peut être dangereux, notamment lorsque la mer est formée.

Le câble tracteur comprend généralement une âme formée de conducteurs électriques et/ou optiques permettant de transmettre de l'énergie et des informations entre des équipements du sonar situés à bord du navire et les antennes. L'âme du câble (« core cable » en anglais) est généralement recouverte d'un toron (« strand » en anglais) de fils métalliques assurant la tenue mécanique du câble. Le corps remorqué est généralement massif. Il peut être équipé d'ailerons assurant sa stabilité hydrodynamique. L'antenne linéaire de réception peut s'étendre sur une longueur de l'ordre d'une centaine de mètre afin de permettre la détection d'ondes sonores se propageant dans l'eau en basse fréquence. Il peut s'agir d'écho d'ondes sonores émises par l'antenne d'émission lorsque le sonar fonctionne en mode actif. Le sonar peut également fonctionner en mode passif sans émission d'ondes sonores.

Dans la demande de brevet WO 2018/065385A1 déposée au nom de la demanderesse, un seul treuil permet de manipuler le câble tracteur et l'antenne de réception. La câble tracteur et l'antenne de réception sont solidaires l'un de l'autre. Lors de la mise à l'eau, Le corps remorqué est accroché et connecté au niveau de la jonction entre le câble tracteur et l'antenne de réception. Une telle disposition du câble tracteur et de l'antenne de réception sur un même treuil pose certains problèmes. Notamment, le treuil doit être adapté au plus grand rayon de courbure admissible par le câble tracteur et par l'antenne de réception. Cela peut conduire à un surdimensionnement important du touret du treuil. De plus, il peut être utile de manipuler séparément le câble tracteur et l'antenne de réception, ce que ne permet pas le treuil unique.

L'invention prévoit la mise en œuvre de deux treuils distincts, l'un pour le câble tracteur et l'autre pour l'antenne de réception. L'invention a pour objet de faciliter les manœuvres de mise à l'eau et de récupération des différents éléments du dispositif sous-marin remorqué.

A cet effet, l'invention propose un dispositif sous-marin destiné à être remorqué par un bâtiment de surface et un système de manutention destiné à être installé sur le bâtiment de surface et permettant de stocker et déployer le dispositif sous-marin tel que revendiqué par la revendication 1.

Avantageusement, l'articulation du bras au corps allongé souple est déconnectable.

Le dispositif sous-marin peut comprendre une liaison électrique et/ou optique entre le corps remorqué et le corps allongé souple. La liaison électrique et/ou optique est avantageusement déconnectable.

Avantageusement, le bras comprend, à sa seconde extrémité, un chaumard permettant de guider le corps allongé souple. Le corps allongé souple comprend alors une noix configurée pour venir en butée contre le chaumard, la noix étant disposée en une extrémité du corps allongé souple, extrémité articulée au bras.

L'actionneur peut être le second treuil ou distinct du second treuil.

Le système de manutention peut comprendre deux portes manœuvrables séparément l'une de l'autre, une première des deux portes étant disposée entre le premier treuil et la mer, une seconde des deux portes étant disposée entre le second treuil et la mer. Dans la seconde position du bras, le système de manutention est configuré pour que la première des deux portes puisse rester fermée.

L'invention a également pour objet un procédé de mise en œuvre du dispositif sous-marin et du système de manutention selon l'une des revendications 1-8 permettant la mise à l'eau du dispositif, pour mettre à l'eau le dispositif sous-marin le procédé consiste à enchainer les opérations suivantes :
a. dérouler le second treuil pour mettre à l'eau le corps allongé souple,
b. connecter le corps allongé souple à la seconde extrémité du bras en position désalignée,
c. amener le bras en position alignée,
d. dérouler le premier treuil.

Dans une première variante, le procédé consiste, entre les opérations c et d, à :
e. décrocher le corps allongé souple du second treuil en manœuvrant le mécanisme d'accrochage.

Dans une seconde variante, le procédé consiste, entre les opérations b et c, à :
f. mettre en œuvre l'actionneur pour reprendre les efforts du corps allongé souple sur le bras,
g. décrocher le corps allongé souple du second treuil en manœuvrant le mécanisme d'accrochage,
l'opération c étant réalisée au moyen d'une manœuvre de l'actionneur.

L'invention sera mieux comprise et d'autres avantages apparaîtront à la lecture de la description détaillée d'un mode de réalisation donné à titre d'exemple, description illustrée par le dessin joint dans lequel :
la figure 1 représente de façon schématique un navire tractant un sonar actif ;
la figure 2 représente le navire de la figure 1 dont le sonar est en cours de mise à l'eau ou de remontée ;
les figures 3, 4, 5, 6, 7 et 8 illustrent la mise à l'eau et la remontée d'une antenne de réception du sonar représenté sur les figures 1 et 2 ;
les figures 9, 10 et 11 illustrent une première variante d'un système de manutention du sonar représenté sur les figures 1 et 2 ;
les figures 12, 13, 14, 15, 16 et 17 illustrent une seconde variante d'un système de manutention du sonar représenté sur les figures 1 et 2.

Par souci de clarté, les mêmes éléments porteront les mêmes repères dans les différentes figures.

L'invention est décrite en rapport au remorquage d'un sonar actif par un bâtiment de surface. Il est bien entendu que l'invention peut être mise en œuvre pour tout type de dispositifs sous-marins remorqués.

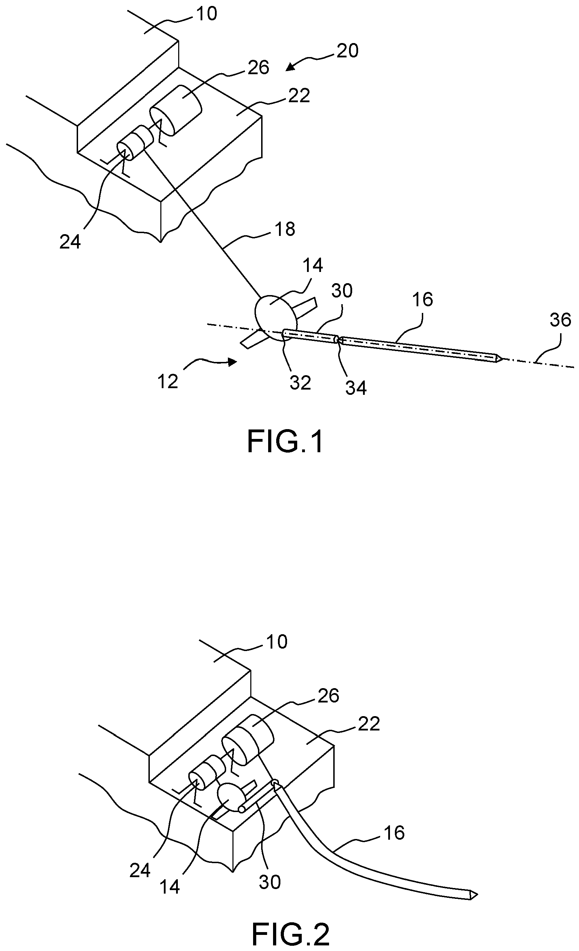

**La** **figure 1** représente un navire 10 tractant un sonar actif 12 comprenant un corps remorqué 14 intégrant une antenne d'émission acoustique et un corps allongé souple 16 formant une antenne de réception acoustique. Par la suite, le corps remorqué sera appelé poisson 14 et le corps allongé souple sera appelé flûte 16. Le sonar 12 comprend également un câble 18 permettant de tracter le poisson 14 et la flûte 16. Le câble 18 assure également l'acheminement de signaux et d'alimentations entre le navire 10, le poisson 14 et la flûte 16.

Le poisson 14 et la flûte 16 sont mécaniquement arrimés et connectés électriquement et/ou optiquement au câble 18 de manière appropriée. De manière classique, la flûte 16 est formée d'une antenne linéaire de forme tubulaire identique à celles que l'on trouve dans les sonars passifs, d'où son nom de flûte, tandis que l'antenne d'émission est intégrée dans une structure volumique formant le corps remorqué 14 ayant une forme s'apparentant à celle d'un poisson. La flûte 16 est arrimée au poisson 14 qui, lui-même, est arrimé à l'extrémité du câble 18. Durant une mission d'acoustique sous-marine en mode actif, l'antenne du poisson 14 émet des ondes sonores dans l'eau et l'antenne de réception de la flûte 16 capte d'éventuels échos provenant de cibles sur lesquels se reflètent les ondes sonores issues de l'antenne d'émission.

Un dispositif de manutention 20 est disposé sur un pont arrière 22 du navire 10. Le dispositif de manutention 20 comprend deux treuils 24 et 26. Le treuil 24 permet de stocker et déployer le câble tracteur 18 et le poisson 14. Le treuil 26 permet de stocker et déployer la flûte 16. En position déployée du sonar actif 12, comme représenté sur la figure 1, seul le treuil 24 est en fonction. Le treuil 24 tracte l'ensemble du sonar 12. Plus précisément, le câble 18 tracte le poisson 14 et la flûte 16 est accrochée derrière le poisson 14.

Sur la figure 1, le treuil 24 est situé à bâbord du navire 10 et le treuil 26 à tribord. D'autres configurations sont également possibles, treuil 24 à tribord et treuil 26 à bâbord, treuil 24 au-dessus ou au-dessous du treuil 26. De façon plus générale les deux treuils 24 et 26 sont décalés l'un par rapport à l'autre.

Le sonar 12 comprend un bras 30 articulé à l'une de ses extrémités 32 au poisson 14 et à sa seconde extrémité 34 à la flûte 16. Sur la figure 1, en position déployée du sonar actif 12, le bras 30 est aligné avec la flûte 16. Plus précisément, le bras 30 et la flûte 16 s'étendent tous deux sensiblement selon le même axe 36. Lorsque le navire 10 navigue en ligne droite, l'axe 36 est sensiblement parallèle à l'axe de déplacement du navire. En pratique les forces de trainée subies par la flûte 16 orientent le bras 30 et la flûte 16 naturellement dans l'eau selon l'axe 36 qui peut osciller notamment en fonction de variations de cap suivi par le navire 10 et en fonction des conditions météorologiques.

**La** **figure 2** représente le navire de la figure 1 dont le sonar 12 est en cours de mise à l'eau ou de remontée. Plus précisément, le poisson 14 est posé sur le pont 22 éventuellement dans un berceau prévu pour l'accueillir. Le treuil 24 est à l'arrêt. Le câble 18 est presque en totalité enroulé sur le treuil 24. Le bras 30 est désaligné de la flûte 16 permettant l'alignement de la flûte 16 avec le treuil 26. Cette position désalignée du bras 30 dépend de plusieurs paramètres dimensionnels du dispositif de manutention 20, notamment la longueur du bras 30, la position relative du poisson 14 et du treuil 24, la distance séparant les deux treuils 24 et 26 ainsi que leur position relative.

Pour assurer un bon alignement du bras 30 et de la flûte 16, à l'extrémité 32, l'articulation entre le poisson 14 et le bras 30 est avantageusement de type rotule doigt, ou rotule, c'est-à-dire possédant au moins deux degrés de liberté en rotation autour d'axes perpendiculaires à l'axe 36. De même, à l'extrémité 34, l'articulation entre le bras 30 et la flûte 16 possède avantageusement au moins un degré de liberté en rotation au tour d'un axe permettant l'alignement de la flûte 16 avec le treuil 26. La flûte 16 conserve avantageusement un degré de liberté en rotation autour de l'axe 36. Ce degré de liberté peut être assuré soit à l'extrémité 32 au moyen d'une liaison rotule soit à l'extrémité 34, au moyen d'une liaison rotule à doigt. Il est également possible de positionner ce degré de liberté à la fois à l'extrémité 32 et à l'extrémité 34, ce qui permet de faciliter l'alignement de la flûte 16 avec le treuil 26.

En l'absence de bras 30, l'opérateur chargé de manipuler le sonar 12 pour le mettre à l'eau et pour le remonter à bord du navire 10, doit intervenir à l'arrière du poisson 14 pour accrocher la flûte 16 lors de la mise à l'eau et pour la décrocher lors de la remontée du sonar 12. Cette manœuvre de l'opérateur se fait dans une position inconfortable car il est gêné par la forme du poisson 14. De plus, cette manœuvre se fait à proximité de l'eau et peut être dangereuse, notamment lorsque la mer est formée. La présence du bras 30 permet à l'opérateur chargé de raccorder la flûte 16 au poisson 14 de ne pas se déplacer derrière le poisson 14 pour effectuer le raccordement.

Il est possible d'améliorer encore la sécurité de l'opérateur au moyen d'un système de portes permettant d'isoler le pont 22 de la mer.

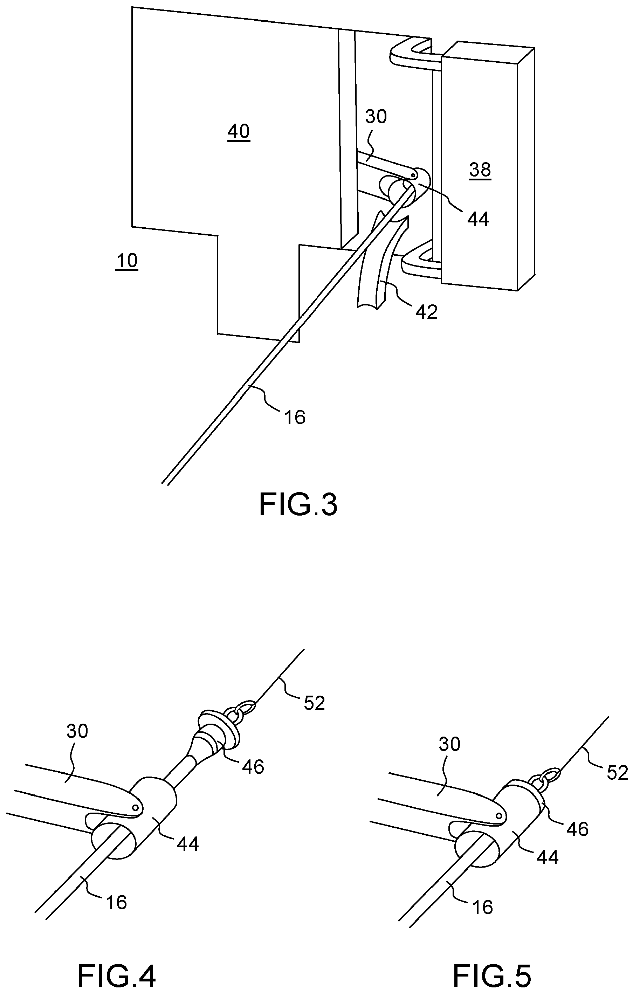

**La** **figure 3** représente l'arrière du navire 10 lors de la mise à l'eau de la flûte 16. Le système de manutention peut comprendre deux portes 38 et 40 isolant les treuils 24 et 26 ainsi que le poisson 14 de la mer lorsque les portes sont fermées. Plus précisément, la porte 38 est disposée entre le treuil 26 et la mer. La porte 40 est disposée entre le treuil 24 et la mer. Les deux portes 38 et 40 peuvent être manœuvrées indépendamment l'une de l'autre. Dans la variante représentée, la porte 40 possède une surface plus importante que la porte 38. En effet, en position ouverte, la porte 40 doit permettre le passage du poisson 14 alors que la porte 38 doit permettre le passage de la flûte 16 qui présente une section beaucoup plus faible que celle du poisson 14, les sections étant définies perpendiculairement à l'axe 36. Alternativement, les deux portes 38 et 40 pourraient avoir des surfaces égales. La porte 40 pourrait même avoir une surface plus faible que la porte 38.

Sur la figure 3, la porte 40 est fermée. Le poisson 14 est disposé sur le pont 22. Le poisson 14 est protégé de la mer. La porte 38 est ouverte et la flûte 16 est partiellement dans l'eau. La flûte 16 est en partie enroulée sur le treuil 26 et en partie dans l'eau derrière le navire 10. Les portes 38 et 40 peuvent être pivotantes comme représentées sur la figure 3. Tant que le bras 30 est en position désalignée, la porte 40 peut rester fermée. Tout type d'ouverture de porte peut être mise en œuvre dans le cadre de l'invention : les portes peuvent par exemple être coulissantes, pliantes ou à enroulement. Il est avantageux de prévoir deux portes 38 et 40 distinctes permettant l'ouverture, soit de l'une soit de l'autre. Plus précisément, dans la configuration de la figure 3, seule la porte 38 est ouverte. Dans la configuration de la figure 1 où le bras 30 et la flûte 16 sont alignés, la porte 40 doit rester ouverte et il est possible de refermer la porte 38. Alternativement, pour simplifier le système de manutention, il est possible de ne prévoir qu'une seule porte par exemple coulissante que l'on entrouvre dans la configuration de la figure 3 et que l'on ouvre complètement dans la configuration de la figure 1.

Le système de manutention peut comprendre une languette 42 sur laquelle s'appuie la flûte 16 lorsque la porte 38 est ouverte. Plus précisément la languette 42 est mobile en translation par rapport au pont 22 selon un axe ayant une orientation voisine de la direction prise par la flûte 16 en sortie du navire 10 avant qu'elle ne traine dans l'eau. La languette 42 permet de supporter la flûte 16 avant qu'elle n'atteigne l'eau afin de ne pas plonger avec une inclinaison trop importante lorsque seul son poids l'entraine. Une fois que la flûte 16 a atteint l'eau, une force de trainée s'exerçant sur la flûte 16 tend à limiter son inclinaison. En position rétractée, la languette 42 peut être masquée par la porte 38. En position étirée, la languette 42 peut dépasser du volume occupé par la porte 38 en position fermée. La languette 42 n'est alors étirée que lorsque la porte 38 est ouverte.

Le système de manutention peut comprendre, à l'extrémité 34 du bras 30, un chaumard 44 (bien connu dans la littérature anglo-saxonne sous le nom de « fairlead »). Le chaumard 44 permet de guider la flûte 16 lorsque le treuil 26 manœuvre la flûte 16 soit pour la mettre à l'eau soit pour la remonter. Le chaumard 44 permet de guider la flûte 16 selon l'axe 36. Les dimensions de la section de la flûte 16 perpendiculairement à l'axe 36 sont plus faibles que les dimensions de la section intérieure du chaumard 44. Le chaumard 44 peut assurer la liberté en rotation de la flûte autour de l'axe 36. Une liaison pivot suffit alors à relier le chaumard 44 au bras 30 à son extrémité 34.

Dans la variante représentée, le chaumard 44 possède une section fermée autour de la flûte 16. Alternativement, la section du chaumard 44 peut être ouverte afin de permettre le positionnement de la flûte 16 dans le chaumard 44 après le début de la mise à l'eau de la flûte 16. Le chaumard 44 peut disposer d'une porte mobile permettant de refermer sa section ouverte.

La connexion mécanique de la flûte 16 au bras 30 peut être réalisée au moyen d'une noix 46 solidaire de la flûte 16. La noix 46 est disposée à l'extrémité de la flûte 16 destinée à s'articuler au bras 30. Lors de la mise à l'eau du sonar 12, la flûte 16 circule dans le chaumard 44. Lorsque la quasi-totalité de flûte 16 a traversé le chaumard 44, la noix 46 vient en butée contre le chaumard 44. Des dimensions de la section de la noix 46 perpendiculairement à l'axe 36 sont plus importantes que des dimensions de la section intérieure du chaumard 44 afin de permettre à la noix 46 de venir en butée contre le chaumard 44. Sur **la** **figure 3**, la flûte 16 glisse au travers du chaumard 44. **La** **figure 4** représente la noix 46 avant son accostage contre le chaumard 44 et **la** **figure 5** représente la noix 46 en butée contre le chaumard 44. D'autres formes complémentaires de la noix 46 et du chaumard 44 permettant un arrêt en translation de la noix 46 par rapport au chaumard 44 selon l'axe 36 dans la configuration de la figure 1 sont possibles. On peut par exemple prévoir un emmanchement conique de la noix 46 dans le chaumard 44.

Alternativement au chaumard 44, l'articulation entre le bras 30 et le la flûte 16 peut simplement être amovible. L'articulation formée ici par une liaison à au moins un degré de liberté en rotation, comme par exemple une liaison pivot permettant la rotation du bras 30 par rapport à la flute 16 peut être démontable afin de permettre à l'extrémité de la flûte 16 de se libérer du bras 30 pour enrouler la flûte 16 sur le treuil 26. Autrement dit, lorsque l'extrémité de la flûte 16 est articulée au bras 30 en son extrémité 34, l'articulation possède un ou plusieurs degrés de liberté en rotation afin de permettre le passage du bras 30 entre ses deux positions : la première position dite déployée où le bras 30 est aligné avec la flûte 16 et la seconde position où le bras 30 est désaligné de la flûte 16, la seconde position permettant l'alignement de la flûte 16 avec le second treuil 26. Afin de permettre l'enroulement de la flûte 16 sur le treuil 26, cette liaison en rotation est amovible. Le chaumard 44 permet de conserver un guidage de la flûte 16 par rapport à l'extrémité 34 du bras 30. Il est également possible de libérer complètement la flûte 16 de l'extrémité 34 du bras 30.

Le treuil 26 permet d'enrouler et de dérouler la flûte 16. Un câble d'accrochage 52 est fixé temporairement entre le treuil 26 et la flûte 16. Le câble d'accrochage 52 permet de dérouler complètement la flûte 16 pour amener une de ses extrémités au niveau du bras 30 pour y être connectée mécaniquement. Lors de la remontée du sonar 12, une fois la flûte 16 alignée avec le treuil 26, l'enroulement autour du treuil 26 débute par l'enroulement du câble d'accrochage 52 puis l'enroulement de la flûte 16 sur le treuil 26. La noix 46 forme une interface entre la flûte 16 et le câble d'accrochage 52. La noix 46 est également enroulée sur le treuil 26.

Alternativement, il est possible d'accrocher directement la flûte 16 au treuil 26, par exemple au moyen d'un mousqueton solidaire du treuil 26. De façon générale tout mécanisme d'accrochage de la flûte 16 au treuil 26 peut être mis en œuvre. Le mécanisme d'accrochage est manœuvrable par l'opérateur qui peut accrocher la flûte 16 au treuil 26 lors de la remontée de celle-ci à bord du navire et qui peut décrocher la flûte 16 du treuil 26 lors de la mise à l'eau.

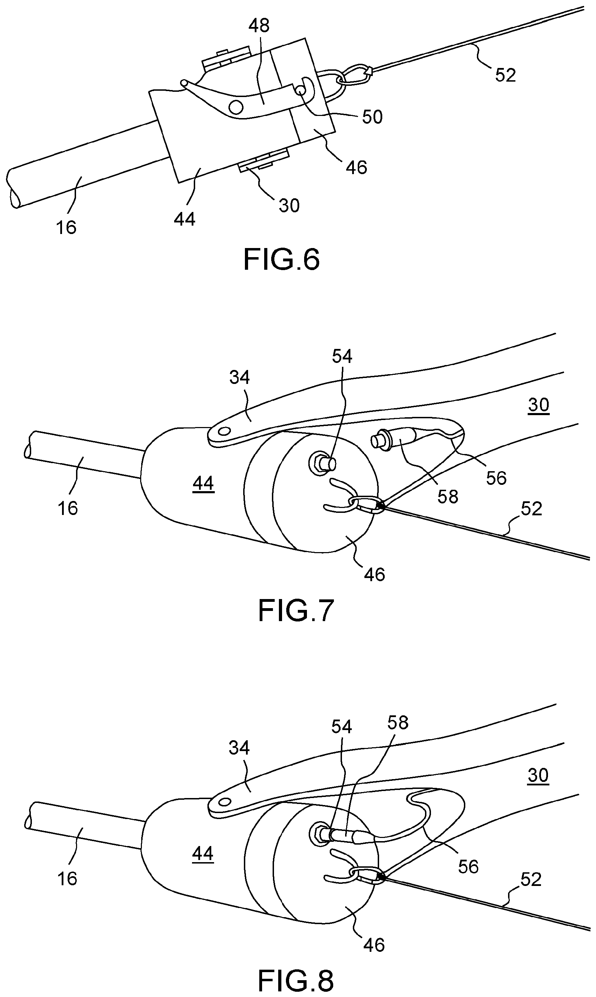

En service, lorsque le sonar 12 est remorqué, la flûte 16 est soumise à une trainée due à la vitesse du navire 10. La trainée tend à maintenir la noix 46 en butée contre le chaumard 44. Certaines manœuvres du navire 10, notamment l'arrêt de son déplacement vers l'avant ou une marche arrière, peuvent annuler la trainée exercée sur la flûte 16. L'état de la mer peut également annuler au moins temporairement la trainée exercée sur la flûte 16. Pour éviter que la noix 46 ne se décolle du chaumard 44, il est possible de prévoir des moyens bidirectionnels d'immobilisation de la flûte 16 par rapport au chaumard 44. Ces moyens peuvent être réalisés par adhérence, par exemple au moyen d'un ajustement serré d'une partie de la noix 46 pénétrant dans le chaumard 44. Alternativement ou en complément, les moyens bidirectionnels d'immobilisation peuvent être réalisés par obstacle par exemple au moyen d'un verrou 48 comme représenté sur **la** **figure 6**. Le verrou 48 est articulé par rapport au chaumard 44 et s'accroche, en position verrouillée, sur une partie proéminente 50 de la noix 46. En position déverrouillée, le verrou 48 libère la partie proéminente 50 autorisant ainsi le retrait de la noix 46 hors du chaumard 44.

En complément de la connexion mécanique entre la flûte 16 et le bras 30 en son extrémité 34, le sonar 12 peut disposer d'une liaison électrique et/ou optique entre le poisson 14 et la flûte 16. Cette liaison est alors déconnectable. Plus précisément, la flûte 16 peut disposer d'une embase 54 par exemple solidaire de la noix 46. Un câble 56, relié électriquement et/ou optiquement au poisson 14, peut transiter à l'intérieur du bras 30. Une extrémité du câble 56 est munie d'une fiche 58 qu'un opérateur 60 raccorde sur l'embase 54 lorsque la noix 46 est en butée contre le chaumard 44 ou plus généralement, lorsque la flûte 16 est connectée mécaniquement au bras 30. La connexion électrique entre la flûte 16 et le bras 30 est visible sur **les** **figures 7 et 8**. De façon plus générale, tout type de connexion entre la flûte 16 et le poisson 14 peut être mise en œuvre. La connexion peut être réalisée sans contact physique par exemple au moyen d'une liaison radiofréquence se développant entre deux terminaisons situées au voisinage l'une de l'autre, l'une étant disposée dans le bras 30 et l'autre étant disposée dans le chaumard 44 ou même dans la noix 46.

En variante de la connexion avec contact physique, il est possible d'éviter l'opération manuelle de connexion de la fiche 58 sur l'embase 54. A cet effet, les points de connexion de la fiche 58 sont intégrés au chaumard 44. Les points de connexion de l'embase 54 restent intégrés à la noix 46. La connexion entre le poisson 14 et la flûte 16 se fait lors de l'insertion de la noix 46 dans le chaumard 44.

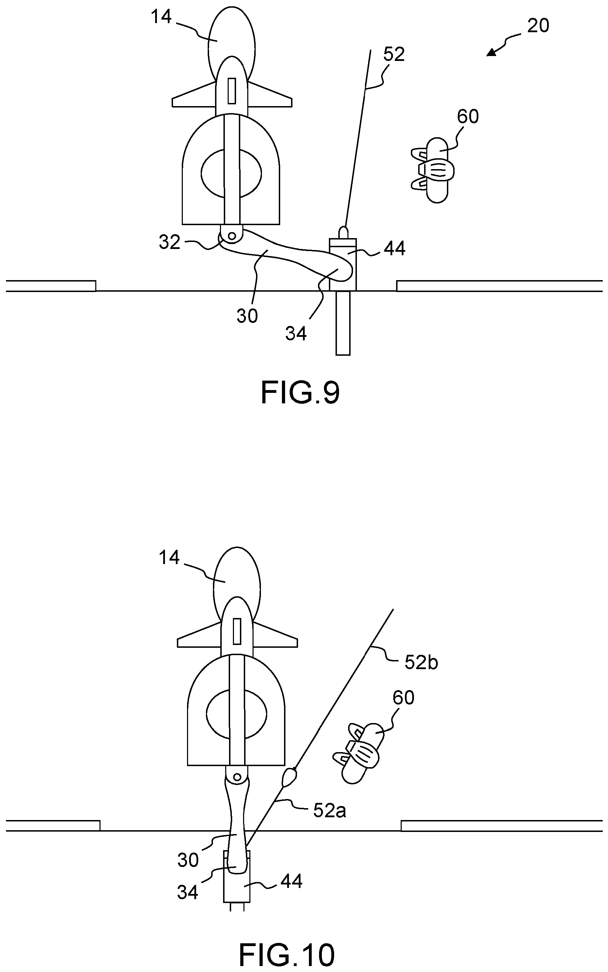

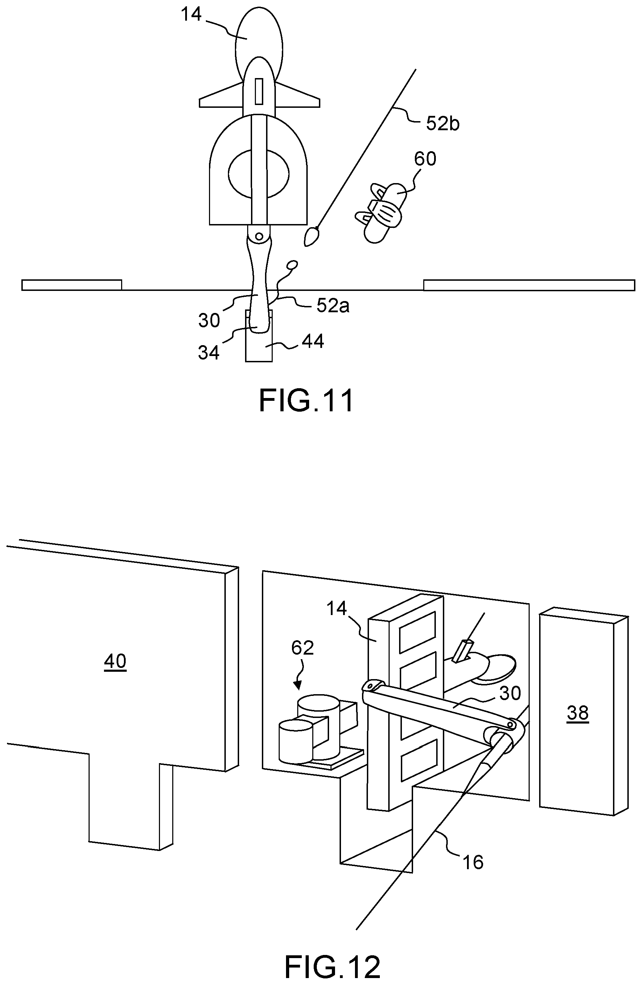

Les **figures 9, 10** **et** **11** illustrent une première variante du système de manutention 20. Dans cette variante, le bras 30 passe de sa position désalignée de la flûte 16, permettant l'alignement de la flûte 16 avec le treuil 26, à sa position alignée avec la flûte 16, au moyen du treuil 26. Lors du passage entre la position désalignée à la position alignée, la noix 46 reste en butée contre le chaumard 44. Plus généralement, la flûte 16 est connectée au bras 30. Les **figures 10** **et** **11** représentent le bras 30 en position alignée avec la flûte 16 et **la** **figure 9** représente une position intermédiaire du bras 30 entre sa position désalignée et sa position alignée avec la flûte 16. Lors du passage entre ses deux positions, le bras 30 pivote autour de l'articulation de sa première extrémité 32 par rapport au poisson 14. La flûte 16 est déjà dans l'eau et tire sur l'extrémité 34 du bras 30. Le câble d'accrochage 52 exerce également un effort sur le bras 30 en son extrémité 34. Le câble d'accrochage 52 retient le bras 30 en équilibrant l'effort qu'exerce la flûte 16 sur le bras 30. Le passage entre les deux positions du bras 30 se fait en manœuvrant le treuil 26 : en déroulant le câble d'accrochage 52 pour atteindre la position alignée et en enroulant le câble d'accrochage 52 pour atteindre la position désalignée du bras 30.

Lors de la mise à l'eau du sonar 12, dans la première variante du système de manutention 20, il est nécessaire de libérer le bras 30 du câble d'accrochage 52. L'opérateur 60 réalise cette libération comme illustré sur **les** **figures 10** **et** **11****.** Le câble d'accrochage 52 peut être fixé de façon amovible à la noix 46. L'opérateur 60 doit alors intervenir à l'extrémité 34 du bras 30, ce qui peut présenter un danger. Alternativement, le câble d'accrochage 52 peut être réalisé en deux parties 52a et 52b, comme visible sur **les** **figures 10** **et** **11****.** La partie 52a est solidaire du bras 30 et y est fixée en son extrémité 34. La partie 52b est solidaire du treuil 26. Les deux parties 52a et 52b sont fixées l'une à l'autre de façon amovible, par exemple au moyen d'un mousqueton. La libération du câble d'accrochage 52 se fait en détachant les parties 52a et 52b. La partie 52a peut ensuite être rangée le long du bras 30. Ainsi l'opérateur 60 n'intervient plus en bout de bras 30 mais seulement au niveau de la fixation amovible des deux parties 52a et 52b. Alternativement encore, il est possible de prévoir un dispositif automatique de connexion et de déconnexion du câble d'accrochage 52. Ce dispositif peut par exemple comprendre un mousqueton solidaire de la noix 46 et s'ouvrant lorsque la tension du câble d'accrochage 52 se réduit au-dessous d'un seuil prédéfini.

Lors de la mise à l'eau du sonar 12, après avoir décroché le câble d'accrochage 52 du bras 30, le treuil 24 est manœuvré pour mettre à l'eau le poisson et dérouler le câble tracteur 18 à la longueur souhaitée.

La remontée du sonar 12 se fait en inversant l'ordre des opérations décrites plus haut, c'est-à-dire : enroulement du câble tracteur 18 au moyen du treuil 24 pour ramener le poisson 14 sur le pont 22, accrochage du câble d'accrochage 52 à la noix 46 ou accrochage des deux parties 52a et 52b entre elles, mise en œuvre du treuil 26 pour amener le bras 30 de sa position alignée avec la flûte 16 à sa position désalignée et pour enrouler le câble d'accrochage 52 et la flûte 16.

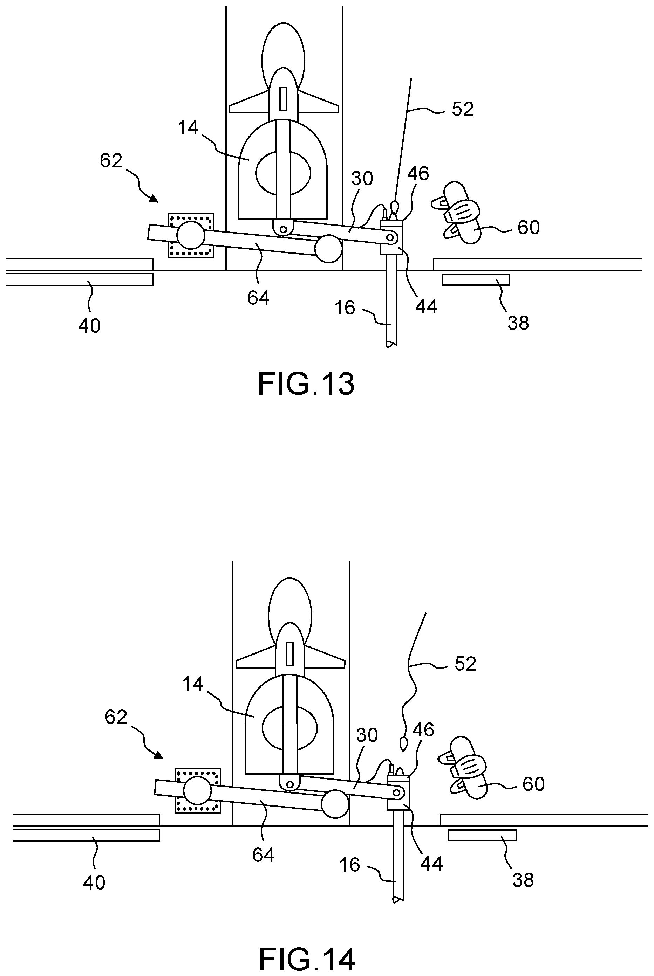

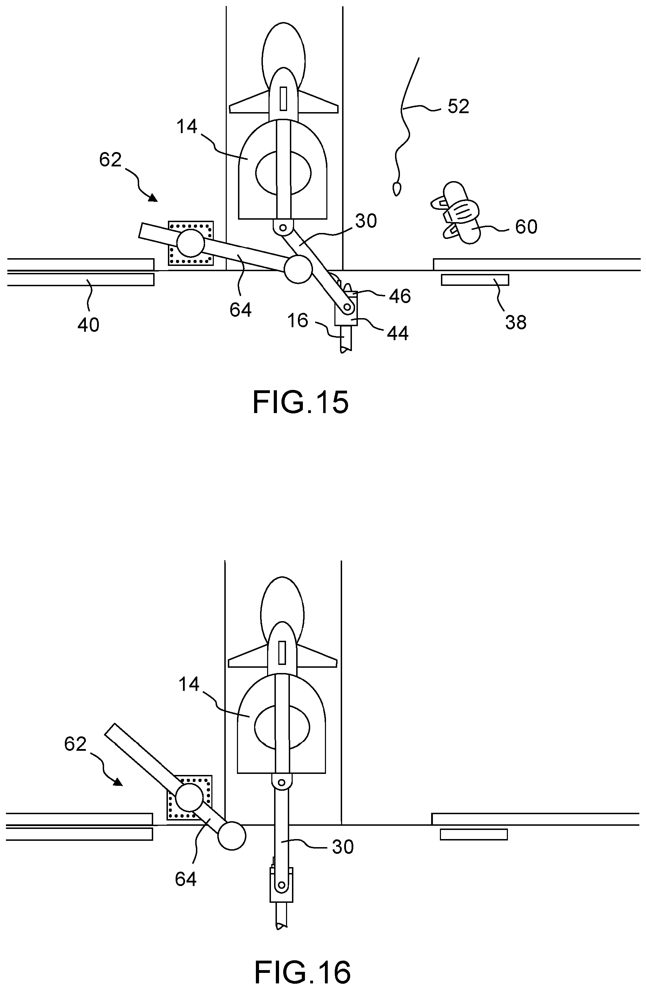

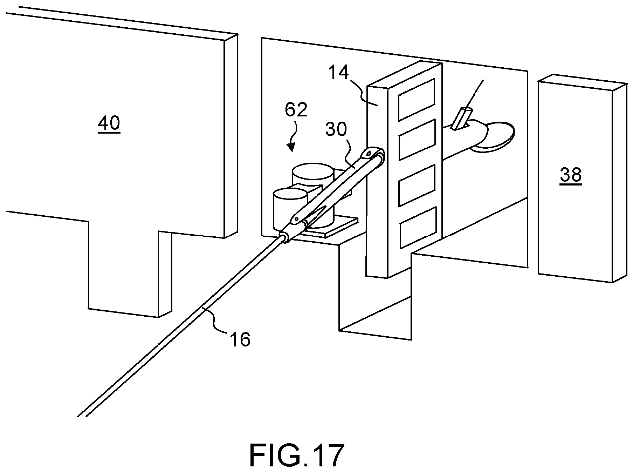

**Les** **figures 12 à 17** illustrent une seconde variante du système de manutention 20. Dans cette variante, le bras 30 passe de sa position désalignée de la flûte 16, permettant l'alignement de la flûte 16 avec le treuil 26, à sa position alignée avec la flûte 16, au moyen d'un actionneur distinct du treuil 26. Cette variante permet à l'opérateur 60 de se reculer du bord du pont 22 encore plus qu'avec la première variante. Dans cette seconde variante, on retrouve le treuil 26 et son câble d'accrochage 52 permettant de retenir la flûte 16 lors de la mise à l'eau du sonar 12 avant l'opération de connexion mécanique de la flûte 16 au bras 30 et plus précisément avant que la noix 46 ne vienne en butée contre le chaumard 44. Durant la mise à l'eau de la flûte 16 et la réalisation de la connexion mécanique au bras 30, seule la porte 38 est ouverte. La connexion électrique peut également être réalisée au moment de la connexion mécanique. Une fois la ou les connexions réalisées, il est possible d'ouvrir la porte 40. **La** **figure 12** représente en perspective le sonar 12 dont la flûte 16 est mise à l'eau. Le poisson 14 est encore sur le pont 22. Les deux portes 38 et 40 sont ouvertes. Le dispositif de manutention 20 comprend, dans cette seconde variante, un actionneur 62 en position inactive sur **la** **figure** 12. L'actionneur 62 est par exemple formé d'un vérin dont la tige 64 est motorisée en translation et en rotation par rapport au pont 22. Sur **la** **figure 13**, la tige 64 est représentée en position active, c'est-à-dire exerçant un effort sur le bras 30 pour le maintenir en position désalignée, la flûte 16 étant encore maintenue par le treuil 26 au moyen du câble d'accrochage 52. Dans cette position de la tige 64, le treuil 26 est manœuvré pour relâcher l'effort exercé par le câble d'accrochage 52. Une fois que le câble d'accrochage 52, n'exerce plus d'effort sur la flûte 16, l'ensemble des efforts exercés sur la flûte 16 sont repris par la tige 64 par l'intermédiaire du bras 30 et l'opérateur 60 peut décrocher le câble d'accrochage 52 de la noix 46, comme représenté sur **la** **figure 14**. Pour poursuivre la mise à l'eau du sonar 12, la tige 64 pivote pour amener le bras 30 progressivement vers sa position alignée avec la flûte 16. **La** **figure 15** représente le bras 30 en position intermédiaire et **la** **figure 16** représente le bras 30 aligné avec la flûte 16, la tige 64 ayant complètement relâchée son effort sur bras 30 et n'étant plus en contact avec celui-ci. Sur **la** **figure 17**, l'actionneur 62 a repris sa position inactive et le treuil 24 est prêt à dérouler le câble tracteur 18 pour mettre à l'eau le poisson 14.

La remontée du sonar 12 se fait en inversant l'ordre des opérations décrites plus haut, c'est-à-dire : enroulement du câble tracteur 18 au moyen treuil 24 pour ramener le poisson 14 sur le pont 22, mise en œuvre de l'actionneur 62 pour amener le bras 30 de sa position alignée avec la flûte 16 à sa position désalignée, accrochage du câble d'accrochage 52 à la noix 46, déverrouillage de la noix 46 du chaumard 44, manœuvre du treuil 26 pour enrouler le câble d'accrochage 52 et la flûte 16. Lors de l'enroulement du câble d'accrochage 52, il est possible de ranger l'actionneur 62.

## Revendications

1. Dispositif sous-marin (12) destiné à être remorqué par un bâtiment de surface (10) et système de manutention (20) destiné à être installé sur le bâtiment de surface (10) et permettant de stocker et déployer le dispositif sous-marin (12), le dispositif sous-marin (12) comprenant un câble tracteur (18), un corps remorqué (14) et un corps allongé souple (16), le corps remorqué (14) étant situé entre le corps allongé souple (16) et le câble tracteur (18) lors de l'utilisation du dispositif sous-marin (12), **caractérisé en ce que** le système de manutention (20) comprend deux treuils distincts (24, 26) pouvant fonctionner indépendamment l'un de l'autre, le premier treuil (24) permettant de stocker et déployer le câble tracteur (18) et le corps remorqué (14), le second treuil (26) permettant de stocker et déployer le corps allongé souple (16), **en ce que** le dispositif sous-marin (12) comprend un mécanisme d'accrochage (52) du corps allongé souple (16) au second treuil (26) et un bras (30) articulé à une première (32) de ses extrémités au corps remorqué (14) et à une seconde (34) de ses extrémités, de façon amovible, au corps allongé souple (16), dans une première position déployée, le bras (30) étant aligné avec le corps allongé souple (16) permettant au premier treuil (24) de tracter l'ensemble du dispositif sous-marin (12), dans une seconde position, le bras (30) étant désaligné du corps allongé souple (16) permettant l'alignement du corps allongé souple (16) avec le second treuil (26) et **en ce que** le système de manutention (20) comprend un actionneur (26 ; 62) configuré pour faire passer le bras (30) entre ses deux positions : position alignée avec le corps allongé souple (16) et position désaligné du corps allongé souple (16).

2. Dispositif sous-marin et système de manutention selon la revendication 1, caractérisé en que l'articulation du bras (30) au corps allongé souple (16) est déconnectable.

3. Dispositif sous-marin et système de manutention selon la revendication 2, caractérisé en que le dispositif sous-marin (12) comprend une liaison électrique et/ou optique entre le corps remorqué (14) et le corps allongé souple (16) et en ce que la liaison électrique et/ou optique est déconnectable.

4. Dispositif sous-marin et système de manutention selon l'une des revendications précédentes, caractérisé en que le bras (30) comprend, à sa seconde extrémité (34), un chaumard (44) permettant de guider le corps allongé souple (16) et en ce que le corps allongé souple (16) comprend une noix (46) configurée pour venir en butée contre le chaumard (44), la noix (46) étant disposée en une extrémité du corps allongé souple (16), extrémité articulée au bras (30).

5. Dispositif sous-marin et système de manutention selon l'une des revendications précédentes, caractérisé en que l'actionneur est le second treuil (26).

6. Dispositif sous-marin et système de manutention selon l'une des revendications 1 à 4, caractérisé en que l'actionneur (62) est distinct du second treuil (26).

7. Dispositif sous-marin et système de manutention selon l'une des revendications précédentes, caractérisé en que le système de manutention comprend deux portes (38, 40) manœuvrables séparément l'une de l'autre, une première des deux portes (40) étant disposée entre le premier treuil (24) et la mer, une seconde des deux portes (38) étant disposée entre le second treuil (26) et la mer et en ce que dans la seconde position du bras (30), la première des deux portes (40) peut rester fermée.

8. Dispositif sous-marin et système de manutention selon l'une des revendications précédentes, caractérisé en que le mécanisme d'accrochage comprend un câble d'accrochage (52) pouvant être fixé entre le second treuil (26) et le corps allongé souple (16).

9. Procédé de mise en œuvre du dispositif sous-marin et système de manutention selon l'une des revendications précédentes permettant la mise à l'eau du dispositif, **caractérisé en ce que** pour mettre à l'eau le dispositif sous-marin (12) il consiste à enchainer les opérations suivantes :
a. dérouler le second treuil (26) pour mettre à l'eau le corps allongé souple (16),
b. connecter le corps allongé souple (16) à la seconde extrémité (34) du bras (30) en position désalignée,
c. amener le bras (30) en position alignée,
d. dérouler le premier treuil (24)

10. Procédé selon la revendication 9 de mise en œuvre du dispositif sous-marin et système de manutention selon la revendication 5, **caractérisé en ce qu'**il consiste, entre les opérations c et d, à :
e. décrocher le corps allongé souple (16) du second treuil (26) en manœuvrant le mécanisme d'accrochage (52).

11. Procédé selon la revendication 9 de mise en œuvre du dispositif sous-marin et système de manutention selon la revendication 6, **caractérisé en ce qu'**il consiste, entre les opérations b et c, à :
f. mettre en œuvre l'actionneur (62) pour reprendre les efforts du corps allongé souple (16) sur le bras (30),
g. décrocher le corps allongé souple (16) du second treuil (26) en manœuvrant le mécanisme d'accrochage (52),
l'opération c étant réalisée au moyen d'une manœuvre de l'actionneur (62).

## Patentansprüche

1. Unterwasservorrichtung (12), die dazu vorgesehen ist, von einem Oberflächengebäude (10) geschleppt zu werden, und Handhabungssystem (20), das dazu vorgesehen ist, auf dem Oberflächengebäude (10) installiert zu werden und ermöglicht, die Unterwasservorrichtung (12) zu lagern und einzusetzen, wobei die Unterwasservorrichtung (12) ein Schlepptau (18), einen Schleppkörper (14) und einen nachgiebigen länglichen Körper (16) umfasst, wobei der Schleppkörper (14) bei der Verwendung der Unterwasservorrichtung (12) zwischen dem nachgiebigen länglichen Körper (16) und dem Schlepptau (18) gelegen ist, **dadurch gekennzeichnet, dass** das Handhabungssystem (20) zwei verschiedene Winden (24, 26) umfasst, die unabhängig voneinander arbeiten können, wobei die erste Winde (24) ermöglicht, das Schlepptau (18) und den Schleppkörper (14) zu lagern und einzusetzen, wobei die zweite Winde (26) ermöglicht, den nachgiebigen länglichen Körper (16) zu lagern und einzusetzen, dadurch, dass die Unterwasservorrichtung (12) einen Kopplungsmechanismus (52) des nachgiebigen länglichen Körpers (16) an der zweiten Winde (26) und einen Arm (30), umfasst, der an einem ersten (32) seiner Enden am Schleppkörper (14) und an einem zweiten (34) seiner Enden lösbar am nachgiebigen länglichen Körper (16) angelenkt ist, wobei der Arm (30) in einer ausgefahrenen, ersten Position mit dem nachgiebigen länglichen Körper (16) ausgerichtet ist, was ermöglicht, dass die erste Winde (24) die Gesamtheit der Unterwasservorrichtung (12) schleppt, wobei der Arm (30) in einer zweiten Position nicht mit dem nachgiebigen länglichen Körper (16) ausgerichtet ist, was die Ausrichtung des nachgiebigen länglichen Körpers (16) mit der zweiten Winde (26) ermöglicht, und dadurch, dass das Handhabungssystem (20) eine Betätigungsvorrichtung (26; 62) umfasst, die konfiguriert ist, um den Arm (30) zwischen seinen zwei Positionen zu überführen: mit dem nachgiebigen länglichen Körper (16) ausgerichtete Position und nicht mit dem nachgiebigen länglichen Körper (16) ausgerichtete Position.

2. Unterwasservorrichtung und Handhabungssystem nach Anspruch 1, **dadurch gekennzeichnet, dass** das Gelenk des Arms (30) am nachgiebigen länglichen Körper (16) trennbar ist.

3. Unterwasservorrichtung und Handhabungssystem nach Anspruch 2, **dadurch gekennzeichnet, dass** die Unterwasservorrichtung (12) eine elektrische und/oder optische Verbindung zwischen dem Schleppkörper (14) und dem nachgiebigen länglichen Körper (16) umfasst und dadurch, dass die elektrische und/oder optische Verbindung trennbar ist.

4. Unterwasservorrichtung und Handhabungssystem nach einem der vorstehenden Ansprüche, **dadurch gekennzeichnet, dass** der Arm (30) an seinem zweiten Ende (34) eine Klüse (44) umfasst, die ermöglicht, den nachgiebigen länglichen Körper (16) zu führen, und dadurch, dass der nachgiebige längliche Körper (16) eine Mutter (46) umfasst, die konfiguriert ist, um an der Klüse (44) anzuliegen, wobei die Mutter (46) an einem Ende des nachgiebigen länglichen Körpers (16), angelenkten Ende des Arms (30) angeordnet ist.

5. Unterwasservorrichtung und Handhabungssystem nach einem der vorstehenden Ansprüche, **dadurch gekennzeichnet, dass** die Betätigungsvorrichtung die zweite Winde (26) ist.

6. Unterwasservorrichtung und Handhabungssystem nach einem der Ansprüche 1 bis 4, **dadurch gekennzeichnet, dass** die Betätigungsvorrichtung von der zweiten Winde (26) verschieden ist.

7. Unterwasservorrichtung und Handhabungssystem nach einem der vorstehenden Ansprüche, **dadurch gekennzeichnet, dass** das Handhabungssystem zwei voneinander getrennt manövrierbare Türen (38, 40) umfasst, wobei eine erste der zwei Türen (40) zwischen der ersten Winde (24) und dem Meer angeordnet ist, wobei eine zweite der zwei Türen (38) zwischen der zweiten Winde (26) und dem Meer angeordnet ist, und dadurch, dass die erste der zwei Türen (40) in der zweiten Position des Arms (30) geschlossen bleiben kann.

8. Unterwasservorrichtung und Handhabungssystem nach einem der vorstehenden Ansprüche, **dadurch gekennzeichnet, dass** der Kopplungsmechanismus ein Kopplungskabel (52) umfasst, das zwischen der zweiten Winde (26) und dem nachgiebigen länglichen Körper (16) befestigt werden kann.

9. Verfahren zum Betätigen der Unterwasservorrichtung und des Handhabungssystems nach einem der vorstehenden Ansprüche, das das Zuwasserlassen der Vorrichtung ermöglicht, **dadurch gekennzeichnet, dass** es zum Zuwasserlassen der Unterwasservorrichtung (12) daraus besteht, die folgenden Vorgänge aufeinanderfolgend auszuführen:
a. Abwickeln der zweiten Winde (26), um den nachgiebigen länglichen Körper (16) zu Wasser zu lassen,
b. Verbinden des nachgiebigen länglichen Körpers (16) mit dem zweiten Ende (34) des Arms (30) in der nicht ausgerichteten Position,
c. Bringen des Arms (30) in die ausgerichtete Position,
d. Abwickeln der ersten Winde (24).

10. Verfahren nach Anspruch 9 zum Betätigen der Unterwasservorrichtung und des Handhabungssystems nach Anspruch 5, **dadurch gekennzeichnet, dass** es zwischen den Vorgängen c und d aus Folgendem besteht:
e. Entkoppeln des nachgiebigen länglichen Körpers (16) von der zweiten Winde (26) durch Manövrieren des Kopplungsmechanismus (52).

11. Verfahren nach Anspruch 9 zum Betätigen der Unterwasservorrichtung und des Handhabungssystems nach Anspruch 6, **dadurch gekennzeichnet, dass** es zwischen den Vorgängen b und d aus Folgendem besteht:
f. Betätigen der Betätigungsvorrichtung (62), um die Last des nachgiebigen länglichen Körpers (16) auf den Arm (30) aufzunehmen,
g. Entkoppeln des nachgiebigen länglichen Körpers (16) von der zweiten Winde (26) durch Manövrieren des Kopplungsmechanismus (52),
wobei der Vorgang c mittels eines Manövers der Betätigungsvorrichtung (62) durchgeführt wird.

## Claims

1. Underwater device (12) intended to be towed by a surface vessel (10) and handling system (20) intended to be installed on the surface vessel (10) and allowing the underwater device (12) to be stored and deployed, the underwater device (12) comprising a traction cable (18), a towed member (14) and a flexible elongate member (16), the towed member (14) being located between the flexible elongate member (16) and the traction cable (18) during use of the underwater device (12), **characterized in that** the handling system (20) comprises two distinct winches (24, 26) being able to operate independently of one another, the first winch (24) allowing the traction cable (18) and the towed member (14) to be stored and deployed, and the second winch (26) allowing the flexible elongate member (16) to be stored and deployed, **in that** the underwater device (12) comprises a mechanism (52) for fastening the flexible elongate member (16) to the second winch (26), and an arm (30) which is articulated to a first (32) of its ends, to the towed member (14) and to a second (34) of its ends, removably, to the flexible elongate member (16), in a first deployed position, the arm (30) being aligned with the flexible elongate member (16) allowing the first winch (24) to pull the entire underwater device (12), in a second position, the arm (30) being out of alignment with the flexible elongate member (16) allowing the alignment of the flexible elongate member (16) with the second winch (26), and **in that** the handling system (20) comprises an actuator (26; 62), configured to make the arm (30) pass between its two positions: position aligned with the flexible elongate member (16) and position out of alignment with the flexible elongate member (16).

2. Underwater device and handling system according to claim 1, **characterized in that** the articulation of the arm (30) to the flexible elongate member (16) is disconnectable.

3. Underwater device and handling system according to claim 2, **characterized in that** the underwater device (12) comprises an electrical and/or optical connection between the towed member (14) and the flexible elongate member (16), and **in that** the electrical and/or optical connection is disconnectable.

4. Underwater device and handling system according to any one of the preceding claims, **characterized in that** the arm (30) comprises, at its second end (34), a fairlead (44) allowing the flexible elongate member (16) to be guided, and **in that** the flexible elongate member (16) comprises a nut (46) configured to abut against the fairlead (44), the nut (46) being disposed in an end of the flexible elongate member (16), end articulated to the arm (30).

5. Underwater device and handling system according to any one of the preceding claims, **characterized in that** the actuator is the second winch (26).

6. Underwater device and handling system according to any one of claims 1 to 4, **characterized in that** the actuator (62) is distinct from the second winch (26).

7. Underwater device and handling system according to any one of the preceding claims, **characterized in that** the handling system comprises two doors (38, 40) manoeuvrable separately from one another, a first of the two doors (40) being disposed between the first winch (24) and the sea, a second of the two doors (38) being disposed between the second winch (26) and the sea, and **in that** in the second position of the arm (30), the first of the two doors (40) can remain closed.

8. Underwater device and handling system according to any one of the preceding claims, **characterized in that** the fastening mechanism comprises a fastening cable (52) being able to be fixed between the second winch (26) and the flexible elongate member (16).

9. Method for implementing the underwater device and handling system according to any one of the preceding claims, allowing the device to be launched, **characterized in that** to launch the underwater device (12), it consists of sequencing the following operations:
a. unwinding the second winch (26) to launch the flexible elongate member (16),
b. connecting the flexible elongate member (16) to the second end (34) of the arm (30) in the out-of-alignment position,
c. bringing the arm (30) into the aligned position,
d. unwinding the first winch (24).

10. Method according to claim 9 for implementing the underwater device and handling system according to claim 5, **characterized in that** it consists, between operations c. and d., of:
e. unhooking the flexible elongate member (16) from the second winch (26) by manoeuvring the fastening mechanism (52).

11. Method according to claim 9 for implementing the underwater device and handling system according to claim 6, **characterized in that** it consists, between operations b. and c., of:
f. implementing the actuator (62) to return the forces of the flexible elongate member (16) on the arm (30),
g. unhooking the flexible elongate member (16) from the second winch (26) by manoeuvring the fastening mechanism (52),
operation c. being carried out by means of a manoeuvre of the actuator (62).
